(19) Europäisches Patentamt
European Patent Office
Office européen des brevets

(11) **EP 2 651 085 A1**

(12) **EUROPEAN PATENT APPLICATION**

(43) Date of publication:
**16.10.2013 Bulletin 2013/42**

(21) Application number: **12002556.4**

(22) Date of filing: **11.04.2012**

(51) Int Cl.:
*H04L 25/03* (2006.01)　　　*H04L 25/06* (2006.01)
*H04L 1/06* (2006.01)　　　*H04L 1/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **MIMOON GmbH
47057 Duisburg (DE)**

(72) Inventor: **Chen, Rong
47057 Duisburg (DE)**

(74) Representative: **Eisenführ, Speiser & Partner
Postfach 31 02 60
80102 München (DE)**

(54) **Method and apparatus for iterative detection of data streams**

(57) A method and apparatus for detecting a plurality of data streams in a signal received via a plurality of radio channels of a mobile communication system, wherein mean and variance of transmitted symbols of the data streams are calculated from an extrinsic soft information output of a soft input soft output decoder. The variance is used to calculate an adjoint matrix and determinant of the matrix for detecting each of the plurality of data streams in an iterative way based on a channel estimation of the plurality of radio channels. The mean and the channel estimation output are used for iterative interference cancellation for each data stream of the received signal. A data stream of the plurality of data streams is then estimated by applying minimum mean square error, MMSE, detection to the interference-cancelled signal for the data stream.

Fig. 1

**Description**

FIELD OF THE INVENTION

The present invention relates to a method, apparatus and computer program product for detecting a plurality of data streams in a signal received via a plurality of radio channels of a mobile communication system.

BACKGROUND OF THE INVENTION

Multiple input multiple output (MIMO) can be used to achieve high data throughput in the new generation mobile communication systems. For example in **3rd** Generation Partnership Project (3GPP) Long Term Evolution (LTE) systems, transmit diversity, spatial multiplexing, beam forming are employed in downlink and multi-user MIMO are employed in uplink.

The interference from multiple transmit antennas (or multiple users) can be cancelled or at least suppressed by a MIMO detector so as to achieve increased channel capacity of MIMO channels. In modern cellular wireless system, the receiver in one cell could suffer co-channel interference from neighbor cells, which can degrade the performance significantly in some scenarios. Interference rejection combining (IRC) has been used for the suppression of co-channel interference in second generation (2G) and third generation (3G) cellular systems. However, in previous studies of IRC, only one desired data stream has been considered.

However, in fourth generation (4G) cellular systems and other recent wireless standards, multiple data streams of an interfered signal have to be decoded. As an example, Orthogonal Frequency Division Multiplexing (OFDM) has become the selected transmission technique for several recent wireless standards, such as the IEEE standard for local and metropolitan area networks (better known as WiMAX), or the 3GPP LTE. Its ability to cope with time- dispersive channels while allowing for receivers with low complexity, its ability to easily integrate multiple antenna techniques and its flexibility in terms of bandwidth usage and resource allocation are some of the advantages that have motivated its selection. In OFDM, the transmission bandwidth is divided into multiple narrow band subcarriers. By the addition of a proper cyclic prefix (CP), these subcarriers become fully orthogonal and experience frequency flat fading conditions in time- invariant  channels. This allows for simple equalization of the signal at the receiver, while keeping a high spectral efficiency due to the use of orthogonal overlapping subcarriers. In OFDM systems with frequency re- use, however, the signal transmitted from other cells may create co- channel interference which, if not correctly treated, can induce a severe degradation of the receiver performance, especially at the cell edge.

IRC has been used in 2G and 3G systems, where only one required data stream needs to be detected from co- channel interference. IRC is just an extended version of maximum ratio combining (MRC) . In both cases, multiple received signals are weighted and then combined. While MRC assigns weights according to each signal's signal- to- interference- and- noise ratio (SINR), IRC not only estimates each channel independently, but also calculates a covariance matrix so that interference from other channels can be removed based on a determined coherence. In LTE and LTE-advance, MIMO is the major technology to achieve high throughput. Therefore, multiple data streams need to be detected from co- channel interference.

On the other hand, in conventional MIMO detectors, it is assumed that all MIMO channels are known at the receiver side by channel estimation and all interference can be cancelled by the MIMO detector. However, co-channel interference was not considered in soft interference cancellation (SIC) of such conventional MIMO detectors.

SUMMARY OF THE INVENTION

It is an object of the present invention to provide improved multi-stream detection with reduced co-channel interference.

This object is achieved by a method as claimed in claim 1, an apparatus as claimed in claim 10, and a computer program product as claimed in claim 14.

Accordingly, the proposed solution provides a multi- stream (e.g. MIMO) detector/ detection adapted to suppress co- channel interference. The variance of the received signal is used to calculate an adjoint matrix and determinant of the matrix for detecting each data stream in an iterative way based on a channel estimation of the respective radio channels. Moreover, the mean of the received signal and the channel estimation output are used for iterative interference cancelation  for each data stream of said received signal, wherein each data stream of the plurality of data streams is estimated by applying minimum mean square error (MMSE) detection to the interference- cancelled signal for each data stream.

Thus, the detection process does not need any divide operation. The MMSE detection for different desired data streams only involves adjoint matrix calculation without divide operation. The adjoint matrix for detection of different desired data streams is derived in an iterative way to reduce complexity.

The proposed detector/detection can thus suppress co-channel interference and be implemented on hardware or software easily because of non-division and reduced complexity.

According to a first aspect, the soft information output may be derived by the soft input soft output decoder from a log likelihood ratio (LLR) calculated from an output of the MMSE detection. As an example, the extrinsic soft information may comprise LLRs of transmitted bits. The variance and mean may then be calculated based on a probability of each bit in a modulated symbol, the probability being calculated from an LLR of the bit.

According to a second aspect, channel estimation may be performed by multiplying a received reference signal with a hermitian of the reference signal and filtering initial channel estimations to suppress noise and interference.

According to a third aspect, after the first iteration of the interference cancellation, the soft input soft output decoder may output an extrinsic LLR of transmitted channel coding bits and then a prior information of a corresponding data stream may be calculated based on the extrinsic LLR.

According to a fourth aspect, MMSE detection outputs a complex symbol and scaling factor for said estimated data stream, and wherein said scaling factor is used to shift a constellation of a modulation scheme of said received signal and to calculate an LLR of each bit in one modulated symbol.

The MMSE detection may be based on an MMSE detection matrix which has been derived in an iterative way.

Furthermore, the plurality of radio channels may comprise channels of a MIMO communication system.

The above features may be implemented as hardware circuits integrated on a single chip or chip set, or wired on a circuit board. As an alternative, at least parts of the features may be implemented as a software program or routine controlling a multi-tasking processor or computer device, e.g. a software-defined radio (SDR) implementation. As an example, the software program or routine may be implemented in C type programming language.

Other advantages, modifications are defined in the dependent claims.

BRIEF DESCRIPTION OF THE DRAWINGS

The invention will now be described in greater detail based on embodiments with reference to the accompanying drawings in which:

Fig. 1 shows a schematic block diagram of a detection device with MIMO detector and soft input soft output decoder;

Fig. 2 shows a more detailed block diagram of the MIMO detector of Fig. 1, according to a first embodiment;

Fig. 3 shows a comparative diagram of relative throughput versus signal-to-noise ratio of a detector according to the first embodiment in comparison with a conventional detector; and

Fig. 4 shows a schematic block diagram of a software-based implementation according to a second embodiment.

DESCRIPTION OF THE EMBODIMENTS

In the following, embodiments of the present invention will be described based on an iterative IRC MIMO detector.

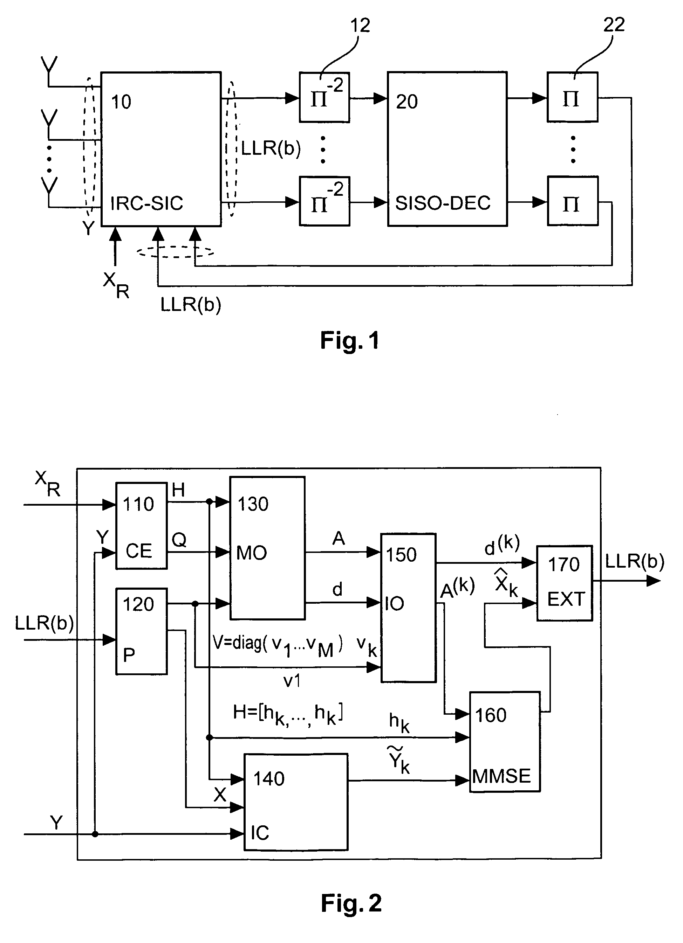

Fig. 1 shows a schematic block diagram of an iterative MIMO receiver in which the present invention can be implemented.

The MIMO receiver involves an iterative detection and decoding process which is based on an information exchange between an IRC-SIC MIMO detector 10 and a soft input soft output (SISO) channel decoder (SISO-DEC) 20, leading to successive performance improvement. They exchange soft information, which has a form of log likelihood ratio (LLR) of a certain bit. First, the MIMO detector 10 processes the received signal Y from a plurality of receiving antennas and the soft information LLR(b) delivered from the channel decoder 20 to obtain the LLRs of all coded bits (so-called extrinsic information). Such extrinsic information LLR(b) is delivered to the SISO channel decoder 20 through deinterleavers 12. The extrinsic information is seen as a priori information at the side of the channel decoder 20. Based on such a priori information, the channel decoder 20 computes the LLRs of coded bits, which form another extrinsic information LLR(b), which can be used for better MIMO detection. Such extrinsic LLRs are interleaved by interleavers 22 and fed back to the MIMO detector 10 as a priori information. The procedure mentioned so far completes one cycle of iteration and the iterations continue until a desired performance is met.

The IRC-SIC MIMO detector 10 is adapted to suppress co-channel interference in the MIMO system. The whole IRC-SIC MIMO detector 10 does not need any divide operation. As already mentioned above, the proposed IRC-SIC MIMO detector 10 is used together with the SISO decoder 20 in the iterative receiver of Fig. 1.

Fig. 2 shows a more detailed structure of the IRC-SIC MIMO detector 10 according to the first embodiment.

It's assumed that in the MIMO system we have M desired data streams to be detected and $(M_t - M)$ co-channel interfering signal from neighbor cell. The receiver is equipped with $M_r$ receive antennas. The received signal including desired signal and co- channel interfering signal at receiver side can be written as

$$Y = \sum_{i=1}^{M} h_i x_i + \sum_{i=M+1}^{M_t} h_i x_i + z \qquad (1)$$

Where $Y = [Y_1, ..., Y_{M_r}]^T$ is the received signal at the receiver side, $[x_1, ..., x_M]^T$ is the desired data to be detected and $\sum_{i=M+1}^{M_t} h_i x_i$ is is the co- channel interference and z represents the white Gaussian noise. $h_i = [h(i,1), ..., h(i, M_r)]^T$ denotes the channel between $i$'th transmitter and $M_r$ receive antennas. $()^T$ denotes the transpose operation and $()^H$ denotes the hermitian operation.

In the following sections, the sub-modules or sub-functions of the IRC-SIC MI-MO detector 10 will be explained in details.

In a channel estimation module or function (CE) 110 channels are estimated from a transmitted reference signal x. It is noted that reference signals from different transmitters are orthogonal and, furthermore, reference signals in neighbor cells are also orthogonal with each other. Therefore, channel estimation is not influenced by co-channel interference.

The channel for each transmitter-receiver pair can be estimated by multiplying the received reference signal x with the hermitian of the reference signal x and then the initial channel estimations can be filtered by a low pass filter (not shown) to suppress noise and interference. The hermitian function is a complex function whose complex conjugate is equal to the original function with the variable changed in sign.

Based on the channel estimation the covariance matrix Q can be estimated as follows:

$$Q = (Y - Hx_R)(Y - Hx_R)^H \qquad (2)$$

where $H = [h_1, ..., h_M]$ is the MIMO channel characteristic between desired transmitters and the receiver.

In the priori module or function (P) 120, mean and variance of transmitted symbols in the desired data stream are calculated from LLRs of transmitted bits of the data stream. The LLRs of the transmitted bits are the extrinsic soft information LLR(b) output from the soft input soft output decoder 20 of Fig. 1. The mean and variance of each symbol can be calculated as following

$$\bar{x}_i = \sum_{\alpha_i \in S} \alpha_i\, p\,(x_t = \alpha_i) \qquad (3)$$

$$v_i = \left( \sum_{\alpha_i \in S} |\alpha_i|^2\, p(x_t = \alpha_i) \right) - \left| \bar{x}_i \right|^2 \qquad (4)$$

where S is the symbol alphabet for a Q-QAM modulation scheme. The probability of each bit in the modulated symbol can be calculated from the LLR of each bit. For an iterative SIC receiver, at the first iteration, there is no priori information available, so that the mean of each transmitted symbol is zero and variance of each transmitted symbol is 1.

In a subsequent matrix operation module or function 130 the adjoint matrix A and the determinant d of this matrix are calculated as follows:

$$A = \mathrm{adj}\ (HH^H + Q) \tag{5}$$

$$d = \det\ (HH^H + Q) \tag{6}$$

The adjoint matrix or "adjoint" of a matrix refers to its corresponding adjoint operator, which is its conjugate transpose. Thus, the proposed MIMO detector 10 does not require any matrix inversion and division operation. Only the adjoint matrix and the determinant of the matrix have to be calculated, and then the adjoint matrix and the determinant for detection of different desired data streams can be derived in an iterative way in the iterative operation module or function (IO) 150. For a different desired data stream, a different MMSE detector matrix can be derived in an iterative way.

It's assumed we have $M$ desired data streams to be detected. Then, for the $k$'th desired data stream, the adjoint matrix and determinant are calculated in the following way.

Set $A^{(0)} = A$

Set $d^{(0)} = d$

For $k = 1$ to $M$ {

$$A^{(k)} = A^{(k-1)}d^{(k-1)} + (1 - v_k)A^{(k-1)}h_k^H A^{(k-1)} h_k - (1 - v_k)A^{(k-1)}h_k h_k^H A^{(k-1)}$$

$$d^{(k)} = d^{(k-1)}(d^{(k-1)} + (1 - v_k)h_k^H A^{(k-1)} h_k)$$

}

Furthermore, an interference cancellation module or function (IC) 140 is provided. In the iterative MIMO receiver, after the first iteration, the soft input soft output decoder 20 will output the extrinsic LLR of transmitted channel coding bits and then the prior information LLR (b) of each desired data stream can be calculated. Since the channels are known at receiver side, the interfering signal of the other desired data streams can be subtracted from the received signal if the $k$'th desired data stream is to be detected.

For the $k$'th desired data stream, the received signal after interference cancellation can be obtained as follows: -

$$\widetilde{Y}_k = Y - \sum_{i=1, i \neq k}^{M} h_i \bar{x}_i \tag{7}$$

An MMSE detector or detection function 160 is adapted to detect the $k$'th desired data stream from the received signal after soft interference cancellation. For a different desired data stream only adjoint matrix calucation without divide operation is involved. The adjoint matrix for MIMO detection of different desired data stream is derived in an iterative way to reduce complexity. For the $k$'th desired data stream, the MMSE estimation can be written as follows:

$$\hat{x}_k = h_k^H A^{(k)}\widetilde{Y}_k \tag{8}$$

In case of M desired data stream, the MMSE detector 160 is executed M times with a different MMSE adjoint matrix and received signal after soft interference cancellation.

For the *k*'th desired data stream, the MMSE detector 160 outputs complex symbol $\hat{x}_k$ and scaling $d^{(k)}$, where the scaling factor $d^{(k)}$ is used by a subsequent extrinsic module or function or soft demapper (EXT) 170 to shift the constellation of the modululation scheme and calculate the LLR of each bit in one modulated symbol. For example, in case of 16QAM modulation, the 4 bits in each modulated symbol can be calculated as follows:

$$LLR(b_1) = 2d^{(k)} - \left| Im(\hat{x}_k) \right| \tag{9a}$$

$$LLR(b_2) = Im(\hat{x}_k) \tag{9b}$$

$$LLR(b_3) = 2d^{(k)} - \left| Re(\hat{x}_k) \right| \tag{9c}$$

$$LLR(b_4) = Re(\hat{x}_k) \tag{9d}$$

In case of other modulation schemes a similar calculation can be applied.

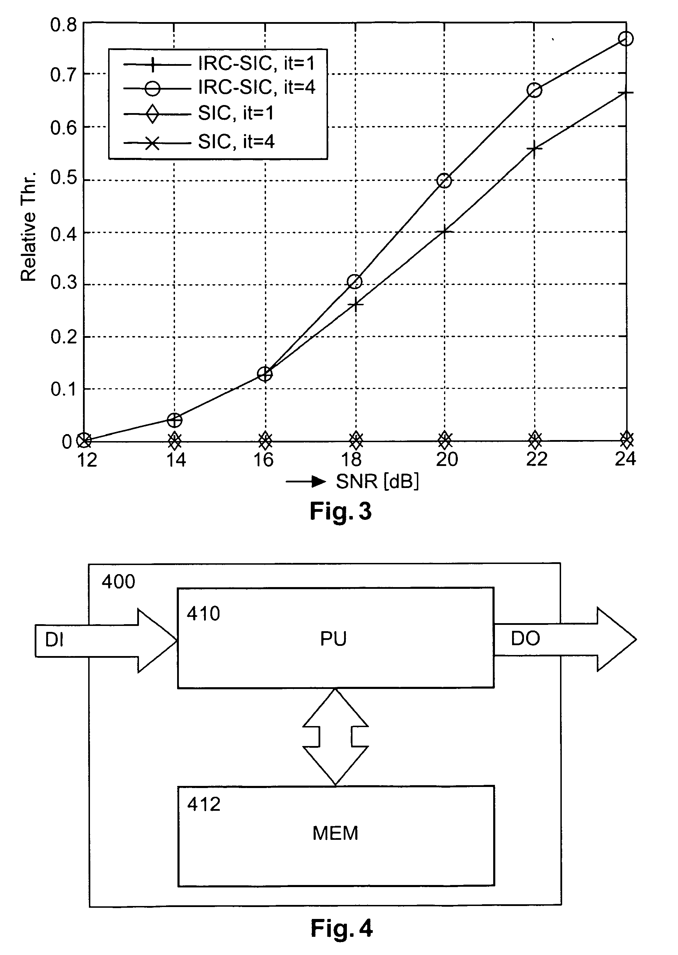

Fig. 3 shows a comparative diagram of relative throughput versus signal-to-noise ratio of a detector according to the first embodiment in comparison with a conventional detector. In the example, a 2x4 MIMO system is used in one cell and suffers a very big co-channel interference with a power level which is almost the same as the power level of the desired signal. If a conventional SIC MIMO detector is used to detect the two desired data streams, the performance (relative throughput) is very bad. However, if the proposed iterative IRC-SIC MIMO receiver is employed, a satisfied performance can be achieved. More specifically, in examples of the diagram, both conventional detector (i.e. SIC MIMO receiver) and proposed detector according to the first embodiment (i.e. IRC-SIC MIMO receiver) have been iterated one time (it=1) and four times (it=4). For the conventional detector, no matter how many iterations the detector has performed, the desired data streams can not be detected at all because of co-channel interference. For the proposed detector, better performance can be achieved with more iterations.

Fig. 4 shows a schematic block diagram of an alternative software-based implementation according to a second embodiment. The required functionalities can be implemented in a computer device 400 with a processing unit 410, which may be any processor or computer device supporting multi-tasking with a control unit which performs control based on software routines of a control program stored in a memory 412. The control program may also be stored separately on a computer-readable medium. Program code instructions are fetch from the memory 412 and are loaded to the control unit of the processing unit 410 in order to perform the functions of the modules of Fig. 2, which may be implemented as the above mentioned software routines. The processing steps may be performed on the basis of input data DI and may generate output data DO. In the present interaction system, the input data DI may correspond to the extrinsic information LLR(b), the received signal Y and the reference signal x, and the output data DO may correspond to the extrinsic information at the output of the extrinsic module 170.

Consequently, the functionalities of the above embodiments may be implemented as a computer program product comprising code means for generating each individual step of the proposed MIMO detection when run on a computer device or data processor.

In summary, a method and apparatus for detecting a plurality of data streams in a signal received via a plurality of radio channels of a mobile communication system have been described, wherein mean and variance of transmitted symbols of the data streams are calculated from an extrinsic soft information output of a soft input soft output decoder. The variance is used to calculate an adjoint matrix and determinant of the matrix for detecting each of the plurality of data streams in an iterative way based on a channel estimation of the plurality of radio channels. The mean and the channel estimation output are used for iterative interference cancellation for each data stream of the received signal. A data stream of the plurality of data streams is then estimated by applying minimum mean square error, MMSE, detection to the interference-cancelled signal for the data stream.

It is apparent that the invention can easily be extended to any software environment which may include a collection of hardware and software technologies where some or all of the operating functions are implemented through modifiable software or firmware operating on programmable processing technologies. Such devices include field programmable gate arrays (FPGAs), digital signal processors (DSPs), general purpose processors (GPPs), programmable System on Chip (SoC) or other application specific programmable processors. The use of these technologies allows new wireless features and capabilities to be added to existing radio systems without requiring new hardware. The embodiments may thus vary within the scope of the attached claims.

**Claims**

1. A method of detecting a plurality of data streams in a signal received via a plurality of radio channels of a mobile communication system, said method comprising:

    a) calculating mean and variance of transmitted symbols of said data streams from an extrinsic soft information output of a soft input soft output decoder (20);
    b) using said variance to calculate an adjoint matrix and determinant of said matrix for detecting each of said plurality of data streams in an iterative way based on a channel estimation of said plurality of radio channels;
    c) using said mean and said channel estimation output for iterative interference cancellation for each data stream of said received signal; and
    d) estimating a data stream of said plurality of data streams by applying minimum mean square error, MMSE, detection to the interference-cancelled signal for said data stream.

2. The method according to claim 1, wherein said soft information output is derived by said soft input soft output decoder (20) from a log likelihood ratio, LLR, calculated from an output of said MMSE detection.

3. The method according to claim 1 or 2, wherein said plurality of radio channels comprise channels of a multiple input multiple output, MIMO, communication system.

4. The method according to any one of the preceding claims, wherein said channel estimation is performed by multiplying a received reference signal with a hermitian of said reference signal and filtering initial channel estimations to suppress noise and interference.

5. The method according to any one of the preceding claims, wherein said extrinsic soft information comprises LLRs of transmitted bits.

6. The method according to claim 5, wherein said variance and mean are calculated based on a probability of each bit in a modulated symbol, said probability being calculated from an LLR of said bit.

7. The method according to any one of the preceding claims, wherein said MMSE detection is based on an MMSE detection matrix derived in an iterative way.

8. The method according to any one of the preceding claims, wherein, after the first iteration of said interference cancellation, said soft input soft output decoder (20) outputs an extrinsic LLR of transmitted channel coding bits and then a prior information of a corresponding data stream is calculated based on said extrinsic LLR.

9. The method according to any one of the preceding claims, wherein said MMSE detection outputs a complex symbol and scaling factor for said estimated data stream, and wherein said scaling factor is used to shift a constellation of a modulation scheme of said received signal and to calculate an LLR of each bit in one modulated symbol.

10. An apparatus for detecting a plurality of data streams in a signal received via a plurality of radio channels of a mobile communication system, said method comprising:

    a) priori calculation means (110) for calculating mean and variance of transmitted symbols of said data streams from an extrinsic soft information output of a soft input soft output decoder (20);
    b) matrix operation means (130, 150) adapted to use said variance to calculate an adjoint matrix and determinant of said matrix for detecting each of said plurality of data streams in an iterative way based on a channel estimation of said plurality of radio channels;

c) interference cancellation means (140) adapted to use said mean and said channel estimation output for iterative interference cancellation for each data stream of said received signal; and

d) detection means (160) for estimating a data stream of said plurality of data streams by applying minimum mean square error, MMSE, detection to the interference-cancelled signal for said data stream.

11. The apparatus according to claim 10, further comprising channel estimation means (110) for performing said channel estimation by multiplying a received reference signal with a hermitian of said reference signal and filtering initial channel estimations to suppress noise and interference.

12. The apparatus according to claim 10 or 11, further comprising an extrinsic module (170) adapted to receive a scaling factor from said detection means (160) and to use said scaling factor to shift a constellation of a modulation scheme of said received signal and to calculate an LLR of each bit in one modulated symbol.

13. A receiver device comprising an apparatus according to any one of claims 10 to 12 and said soft input soft output detector (20).

14. A computer program product comprising code means for producing the steps of any one of claims 1 to 9 when run on a computing device.

12

22

Y

Y

Y

Y

10

IRC-SIC

LLR(b)

$\Pi^{-2}$

$\Pi^{-2}$

20

SISO-DEC

$\Pi$

$\Pi$

$X_R$

LLR(b)

**Fig. 1**

$X_R$

Y

LLR(b)

Y

110
CE

H

Q

120
P

130
MO

A

d

150
IO

$d^{(k)}$

$A^{(k)}$

$\widehat{X}_k$

170
EXT

LLR(b)

$V=diag(v_1...v_M)$   $v_k$

v1

$H=[h_k,\cdots,h_k]$

$h_k$

160
MMSE

$\widetilde{Y}_k$

140
IC

X

**Fig. 2**

**Fig. 3**

**Fig. 4**

**EUROPEAN SEARCH REPORT**

Application Number

EP 12 00 2556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/041475 A1 (KOSHY JOHN C [US] ET AL) 22 February 2007 (2007-02-22) <br> * abstract * <br> * paragraphs [0005], [0010], [0013] - [0017], [0020], [0042], [0048], [0056], [0060], [0062], [0063], [0065] - [0070] * <br> * figures 2,3 * <br> ----- | 1-14 | INV. <br> H04L25/03 <br> H04L25/06 <br> H04L1/06 <br> H04L1/00 |
| X | US 2009/304125 A1 (KIM SEONG-RAG [KR] ET AL) 10 December 2009 (2009-12-10) <br> * abstract * <br> * paragraphs [0023], [0027] - [0029], [0038], [0040], [0042], [0043], [0044], [0046], [0054], [0057], [0058], [0059], [0067], [0068], [0070] * <br> * figures 1, 2, 7 * <br> ----- | 1-14 | |
| A | US 2012/045024 A1 (CUI TAO [GB] ET AL) 23 February 2012 (2012-02-23) <br> * the whole document * <br> ----- | 1-14 | TECHNICAL FIELDS SEARCHED (IPC) <br> H04L |
| A | US 2007/076805 A1 (KALLURI SUDHAKAR [US] ET AL) 5 April 2007 (2007-04-05) <br> * the whole document * <br> ----- | 1-14 | |

The present search report has been drawn up for all claims

| Place of search | Date of completion of the search | Examiner |
|---|---|---|
| Munich | 12 July 2012 | Murcia Martinez, J |

EPO FORM 1503 03.82 (P04C01)

**ANNEX TO THE EUROPEAN SEARCH REPORT
ON EUROPEAN PATENT APPLICATION NO.**                EP 12 00 2556

This annex lists the patent family members relating to the patent documents cited in  the above-mentioned European search report.
The members are as contained in the European Patent Office EDP file on
The European Patent Office is in no way liable for these particulars which are merely given for the purpose of information.

12-07-2012

| Patent document cited in search report | | Publication date | Patent family member(s) | | Publication date |
|---|---|---|---|---|---|
| US 2007041475 | A1 | 22-02-2007 | CA | 2601151 A1 | 21-09-2006 |
| | | | EP | 1861918 A2 | 05-12-2007 |
| | | | JP | 4841615 B2 | 21-12-2011 |
| | | | JP | 2008533912 A | 21-08-2008 |
| | | | JP | 2012005134 A | 05-01-2012 |
| | | | US | 2007041475 A1 | 22-02-2007 |
| | | | WO | 2006099267 A2 | 21-09-2006 |
| US 2009304125 | A1 | 10-12-2009 | KR | 20080052214 A | 11-06-2008 |
| | | | US | 2009304125 A1 | 10-12-2009 |
| | | | WO | 2008069467 A1 | 12-06-2008 |
| US 2012045024 | A1 | 23-02-2012 | US | 2012045024 A1 | 23-02-2012 |
| | | | WO | 2011106571 A2 | 01-09-2011 |
| US 2007076805 | A1 | 05-04-2007 | NONE | | |

EPO FORM P0459

For more details about this annex : see Official Journal of the European Patent Office, No. 12/82